# EUROPEAN PATENT SPECIFICATION

(11) **EP 0 513 680 B1**
(45) Date of publication and mention of the grant of the patent: **30.07.1997**
(21) Application number: 92107786.3
(22) Date of filing: 08.05.1992
(51) Int. Cl.: H04N 7/087

(54) **Improved transmission and reception system for teletext information**
Verbessertes Übertragungs- und Empfangssystem für Teletextinformation
Système de transmission et de réception amélioré pour de l'information télétexte

(30) Priority: 13.05.1991 IT TO910351
(43) Date of publication of application: 19.11.1992
(73) Proprietor: RAI RADIOTELEVISIONE ITALIANA, 00195 Roma (IT)
(72) Inventor: D'Amato, Paolo, I-00195 Roma (IT)
(74) Representative: Dini, Roberto, Dr. Ing.

(56) References cited:
- EP-A- 0 306 208
- ELEKTOR ELECTRONICS vol. 15, no. 171, 30 October 1989, CANTERBURY GB pages 34 - 38 , XP000065737 A.CLAPP 'Computer-Controlled Teletext System'

## Description

The present invention relates to a method and apparatus for the transmission of information in a television channel, under the form of a plurality of teletext pages.

What is intended as the "teletext" system (in Italy "Televideo") is known; such information transmission system provides for inserting within the television signal, during several lines of frame return, coded data, that is repeated in cyclic mode, and that can be displayed on the television under the form of pages containing text and/or graphics.

It is also known the major inconveniences of such system: the amount of time necessary for displaying the page containing the information required is variable, and often great, that is translated as consultation difficulties, in particular information, such as the train time-tables, that often require the passing from one page to another, to then maybe returning to the previous page.

The aim of the present invention is therefore that of indicating a method and apparatus for the transmission of information that allows for, at least in a part of cases, among those being selected more frequently, of making more convenient the consultation of data on behalf of the user.

In allowing for such aims the present invention has as its object a method for the transmission of information having the characteristics described in the attached claim 1; the invention has also as an object a transmission apparatus specifically designed for carrying out the above said method.

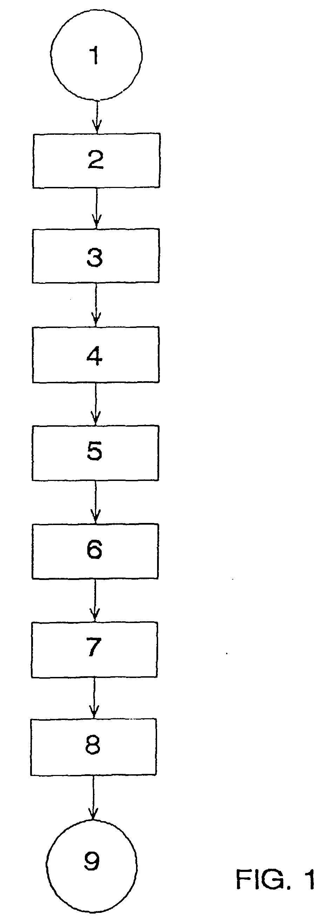

Further aims and advantages of the present invention will become clear from the following detailed description and annexed drawings, supplied as a nonlimiting example, wherein:
the figure schematically represents the logic blocks of the generation "files" routine for the transmission and reception system according to the invention. The procedure of which 'telesoftware' consists is known; it consists of a data transmission system for personal computers, carried out in a 'teletext' environment, in which the data is collected in 'files'.

A system of this type is the object of EP-A-0 306 208 (Italian patent application N° 67873/A-90) in which a system that provides, apart from the transmission of 'files', also that of information that allows the receiving terminal to automatically construct the directories of the 'files' themselves, is described.

The difference between teletext and telesoftware lies in the type of information inserted in each single page; operatively for teletext the information contained in a page can be directly displayed on the screen of the television; whereas for telesoftware the information contained in a page is not destined to be displayed, but is stored in a computer, so as to be successively elaborated and/or utilised in various ways; moreover the possibility of compressing the data so as to accelerate the transmission and acquisition is also provided.

The invention proposes that the 'teletext' page relative to a given subject (for example that of the stock exchange data, or that with meteorological information, or that with the train or air time-tables), are located in a single 'file', that is compressed and transmitted with the 'telesoftware' technique; the compression greatly reduces the acquisition time.

The user of a personal computer supplied with a teletext/telesoftware 'card' also has to have a software ('turboteletext' or 'turbotelevideo') that automatically carries out the following operations:
- acquisition of the 'telesoftware' page containing the required 'file' (for example that of the train time-tables);
- decompression of said 'file';
- division of said 'file' in so many 'files' as are the 'teletext' pages relative to the chosen subject.

Upon the termination of the above mentioned operation, the user will find in the mass memory of the computer 'files' that are identical to those that would be obtained with the direct acquisition of the 'teletext' pages, carried out manually; the consultation can take place utilising the provided commands from the menu calling the page memorised on the disc.

Two advantages are evident: the shorter acquisition time (the compression carried out on the overall 'file' reduces the transmission time up to 25-30%) and the simultaneous availability in the memory of all the pages relative to the chosen subject.

This second advantage manifests itself in various ways: it allows the user to create a file of teletext pages with little effort (without having to acquire the pages one at a time); the user can furnish himself with 'utilities' that allow, for example, the automatic acquisition of previously chosen 'turboteletext' 'files' at fixed times every day, for the constitution of personalised databases, not to mention the elaboration of memorised data.

For example the user could collect the kitchen recipes, and arrange them in an appropriate 'utility' for their consultation, he could construct graphics with the course of the stock exchange, he could collect all the news on a given occurrence, etc.

If the transmission of all the 'turboteletext' pages were carried out on an appropriate television network (for example in Italy on RAI 3), separately therefore from the normal 'teletext', a considerable reduction of the cycle time would be had, that can be valued as a cycle time be equal to a fifth of the normal one.

The reception could also be obtained through television sets containing special 'teletext' cards modified for receiving 'turboteletext'. Generally speaking a 'teletext' microprocessor card could be furnished with such performances, by transferring to the microprocessor of the card the programmes realised on the personal computer for the 'telesoftware' reception.

For the practical realisation of the invention the following is necessary:

### 1. Transmission:

- a routine for the generation and transmission of 'turboteletext' 'files'; such routine could function on a personal computer furnished with a 'teletext/telesoftware' card, and has to carry out the following operations:
- acquisition of the pages indicated by the editor, that can be either static or folders;
- creation of a unique 'file' obtained by summing all the files containing the above mentioned pages;
- compression of the unique 'file';
- creating a 'telesoftware' folder containing the said file;
- sending said 'file' to the central computer, for its transmission of the 'telesoftware' pages indicated by the editor.

For a clearer understanding a detailed description will now be given of the procedure with reference to the annexed figure and to a practical example, i.e. the pages of the plane times transmitted by the RAI 'Televideo'. In the figure block 1 indicates in a conventional way the starting of the routine in object; block 1 passes control to block 2.

Block 2 proceeds with the acquisition of the numbers of the pages to be transmitted according to the system object of the present invention; with reference to the example indicated, the RAI 'Televideo' pages relative to that of the plane time-tables are those comprising 420 through to 422 plus those comprising 424 through to 434; block 2 acquires such information, for example asking the operator; block 2 then proceeds in acquiring the number of the 'telesoftware' page to which it transmits the above mentioned 'Televideo' pages. Control then passes to block 3.

Block 3 provides for making up the 'Televideo' pages indicated by the memory of the central 'Televideo' computer; in the case used as an example there are 61 pages (many of which being folder-pages). Control then passes to the successive block 4.

Block 4 provides for creating a unique 'file' of 61x960 characters, by summing the 61 previously memorised pages. Control passes to block 5.

Block 5 adds to the unique 'file' as soon as the information necessary for allowing receiving apparatus to reconstitute the 61 component 'files' has been created (one for every 'Televideo' sub-page); such information is a list of 61 page numbers, comprising the sub-page number (sub-code), and eventually the names of the 'files'. Control passes to the successive block 6.

Block 6 provides for the compression of the 'file' by using a standard routine (for instance LHARC or PKARC or PKZIP); a 'file' is so obtained, the dimensions of which being typically a fourth/fifth of the initial ones (in the case of the example a 'file' of about 10 kbyte is obtained, that can be transmitted by way of telesoftware in a single page/folder of 13 sub-pages according to the procedure described in the cited patent application N° 67873/A-90. Control passes to block 7.

Block 7 provides for creating the sub-pages of the 'telesoftware' folder sending them to block 8.

Block 8 sends the said sub-pages to the central 'Televideo' computer together with a command that determines the transmission of the 'telesoftware' page whose number has been acquired by block 2. Control passes to block 9.

Block 9 is the conventional end of routine block; control returns to an appropriate block (for example returns to the principle program).

The described routine could be manually or automatically launched the same amount of times as the number of 'Turbotelevideo' 'files' that are desired to be created; for example for the stock exchange 'file' the routine should be launched upon the termination of negotiations; many other subjects require a daily launch (weather, television programs, etc.), whereas others require a weekly launching, others, such as the rail and air time-tables, require a launch after a number of months.

It is evident that the system proposed by the invention is not apt for pages that are to be updated in real time (the latest news, etc.).

### 2. reception:

- it is necessary to carry out several additions to the managing program of the teletext-telesoftware card; they regard the addition in the 'menu' of the 'turboteletext' item, or the automatic acknowledgement of the 'turboteletext files' that in this case would be acquired under the 'telesoftware' voice of the menu. In both cases, after the acquisition, the 'files' have to be automatically placed under the treatment that will now be described:
- decompression of the 'turboteletext file';
- division of the actual 'file' in the single 'files' of 960 characters that constitute the single pages, and
- memorising said 'files' in the 'directory' with the appropriate names so as that the already existing function "re-view a page or sub-page already memorised" can be utilised.

Or a television is needed with a 'teletext' card modified for receiving 'turboteletext': the card should comprise a microprocessor with a suitable memory and 'firmware' that performs all the previous described functions.

As the structure of the 'files' in which the normal 'teletext' pages are memorised are not normalised, the 'turboteletext' service may result in being tied to a determined type of 'teletext/telesoftware' card; this limitation can be overcome if the structure of the 'files' is normalised in transmission, and if the cards are adjusted to such normalisation.

For a further understanding two examples are made.

According to the 'telesoftware' procedure described in the mentioned Italian patent application the transmission of a configuration page is provided for, which contains information that allows the receiving terminal to automatically construct a master directory of the groups in which the 'telesoftware files' are divided, and the indexes of the single groups. In such a case the receiving terminal could automatically present the user with the group index, in which the 'turboteletext' item will figure; if the user selects such item, the index of the 'turboteletext' group will appear, i.e. the list of relative files, among which, for example, that of the plane time-tables.

If however the 'telesoftware' procedure utilised is a simplified procedure, i.e. if the 'files' are not divided into groups, or in any case information is not transmitted for automatically constructing a tree directory, the receiving terminal has to provide for identifying the 'turboteletext files' from the normal 'telesoftware files' (i.e. to divide them into two distinct groups); this could be carried out for instance if the 'turboteletext files' possess a particular extension code that distinguishes them (for example .TTV).

In such a case the terminal will present the user with two items: 'telesoftware' and 'turboteletext'; on choosing the first a menu of the normal 'telesoftware files' will be displayed; on choosing the second the menu of the 'turboteletext files' will be displayed.

The characteristics of described method result in being clear form the description.

From the description the advantages of the method object of the present invention are also clear.

In particular they are represented by the reduction in time for the acquisition and simultaneous availability in the memory of all the pages of the desired 'files'.

It is clear that numerous variants are possible by the skilled man of the art, without however departing from the scope of the invention which is defined in the claims.

## Claims

1. Method for the transmission of information in a television channel, under the form of a plurality of teletext pages, the information being transmitted according to the procedure called 'telesoftware', characterised by the following features:
- a routine for the generation and transmission of special files ('turboteletext files'); such routine operates on a personal computer apparatus, furnished with a suitable card ('teletext/software card') and has to carry out the following operations:
- acquisition of the pages indicated by an editor, that can be either static or folders;
- creation of a unique 'file' obtained by summing up all the files containing the above mentioned pages;
- compression of the unique file;
- sending said file to a central computer for its transmission according to the 'telesoftware' procedure.

2. Method for the transmission of information, according to claim 1, characterised by the fact that:
- a 'file' is created for every page to be transmitted;
- the unique 'file' is creating by summing up the above mentioned 'files';
- the unique 'file' is compressed and sent to the central computer to be transmitted as a 'telesoftware' folder.

3. Method for the transmission of information, according to claim 2, characterised by the fact that the 'telesoftware' folders obtained in this way are transmitted on a separate network from that of the normal 'teletext' service.

4. Method for the transmission of information, according to one or more of the previous claims, characterised by the fact that the 'telesoftware' procedure provides for the transmission of a configuration page, which contains information that allows the receiving terminal to automatically construct a master directory of the groups in which the 'telesoftware' files are divided and the indexes of the individual groups.

5. Apparatus for the transmission of information in a television channel, under the form of a plurality of teletext pages, characterised by:
- a personal computer apparatus, furnished with a suitable card ('teletext/software card'), and a program for the control of:
- means for the acquisition of the pages indicated by an editor, that can be either static or folders;
- means for the creation of a unique 'file' obtained by summing up all the files containing the above mentioned pages;
- means for the compression of said unique file and
- means for sending said file to a central computer for its transmission according to the 'telesoftware' procedure.

## Patentansprüche

1. Verfahren für die Übertragung von Informationen in der Form mehrerer Teletext-Seiten in einem Fernsehkanal, wobei die nach diesem Verfahren übertragene Information als "Telesoftware" bezeichnet wird,
gekennzeichnet durch:
- eine Routine für die Erzeugung und Übertragung bestimmter Dateien ("Turboteletext-Dateien"); eine solche Routine arbeitet auf einem Personal Computer, der mit einer geeigneten Karte ("Teletext/Software-Karte") ausgestattet ist und führt die folgenden Operationen aus:
- Erfassung der durch einen Redakteur bezeichneten Seiten, die entweder statisch oder Mappen sind;
- Erzeugung einer einzelnen "Datei", die durch Zusammenfassen aller Dateien, welche die oben erwähnten Seiten enthalten, erhalten wird;
- Kompression der einzelnen Datei;
- Senden der Datei zu einem Zentralrechner für ihre Übertragung gemäß dem "Telesoftware"-Verfahren.

2. Verfahren für die Übertragung von Informationen nach Anspruch 1,
dadurch gekennzeichnet, daß:
- eine "Datei" für jede zu übertragende Seite erzeugt wird;
- die einzelne "Datei" durch Zusammenfassen der oben erwähnten "Dateien" gebildet wird;
- die einzelne "Datei" komprimiert und zu einem Zentralrechner gesendet wird, um als eine "Telesoftware"-Mappe übertragen zu werden.

3. Verfahren für die Übertragung von Informationen nach Anspruch 2,
dadurch gekennzeichnet, daß die auf diese Weise erhaltenen "Telesoftware"-Mappen in einem von dem normalen "Teletext"-Dienst getrennten Netz übertragen werden.

4. Verfahren für die Übertragung von Informationen nach einem der vorstehenden Ansprüche,
dadurch gekennzeichnet, daß das "Telesoftware"-Verfahren die Übertragung einer Konfigurationsseite vorsieht, welche Informationen enthält, die der Empfangsstation erlauben, automatisch ein Hauptverzeichnis der Gruppen, in welche die "Telesoftware"-Dateien aufgeteilt sind, und die Indizes der einzelnen Gruppen aufzubauen.

5. Vorrichtung für die Übertragung von Informationen in der Form mehrerer Teletext-Seiten in einem Fernsehkanal,
gekennzeichnet durch:
einen Personal Computer, welcher mit einer geeigneten Karte ("Teletext/Software-Karte") und einem Programm ausgestattet ist, für die Steuerung:
- einer Einrichtung für die Erfassung der durch einen Redakteur bezeichneten Seiten, die entweder statisch oder Mappen sind;
- einer Einrichtung für die Erzeugung einer einzelnen "Datei", die durch Zusammenfassen aller Dateien, welche die oben erwähnten Seiten enthalten, erhalten wird;
- einer Einrichtung für die Kompression der einzelnen Datei; und
- einer Einrichtung zum Senden einer Datei zu einem Zentralrechner für ihre Übertragung gemäß dem "Telesoftware"-Verfahren.

## Revendications

1. Procédé pour la transmission d'information dans un canal de télévision, sous la forme d'une pluralité de pages télétexte, l'information étant transmise selon la procédure appelée "télélogiciel", caractérisé par les particularités suivantes :
- un sous-programme pour la génération et la transmission de fichiers spéciaux ("fichiers turbotélétexte") ; ce sous-programme fonctionne sur un appareil ordinateur personnel, muni d'une carte appropriée ("carte télétexte/logiciel") et doit réaliser les opérations suivantes :
. acquisition des pages indiquées par un éditeur, qui peuvent être soient statiques, soit constituées par des "classeurs" ;
. création d'un "fichier" unique obtenu en faisant la somme de tous les fichiers contenant les pages mentionnées ci-dessus ;
. compression du fichier unique ;
. expédition dudit fichier à un ordinateur central pour sa transmission selon la procédure "télélogiciel".

2. Procédé pour la transmission d'information, selon la revendication 1, caractérisé par le fait que :
- un "fichier" est créé pour chaque page à transmettre ;
- le "fichier" unique est créé en faisant la somme des "fichiers" mentionnés ;
- le "fichier" unique est compressé et adressé à l'ordinateur central pour être transmis en tant que classeurs et "télélogiciel".

3. Procédé pour la transmission d'information, selon la revendication 2, caractérisé par le fait que les classeurs "télélogiciels" obtenus de cette façon sont transmis sur un réseau séparé de celui du service normal "télétexte".

4. Procédé pour la transmission d'information, selon l'une ou plusieurs des revendications précédentes, caractérisé par le fait que la procédure "télélogicielle" assure la transmission d'une page de configuration, qui contient de l'information qui permet à la borne de réception de constituer automatiquement un annuaire maître des groupes dans lesquels les fichiers "télélogiciels" sont divisés, ainsi que les index des groupes individuels.

5. Appareil pour la transmission d'information dans un canal de télévision, sous la forme d'une pluralité de pages télétexte, caractérisé par :
- un appareil ordinateur personnel, muni d'une carte appropriée ("carte télétexte/logiciel"), et un programme pour le contrôle de :
. moyens pour l'acquisition des pages indiquées par un éditeur, qui peut être soit statique, soit sous forme de classeurs;
. moyens pour la création d'un "fichier unique" obtenu en faisant la somme de tous les fichiers contenant les pages mentionnées ci-dessus ;
. moyens pour la compression dudit fichier unique ; et
. moyens pour adresser ledit fichier à un ordinateur central pour sa transmission selon la procédure "télélogiciel".
